# EUROPEAN PATENT APPLICATION

(11) **EP 3 792 853 A1**
(43) Date of publication of application: **17.03.2021**
(21) Application number: 20204174.5
(22) Date of filing: 24.06.2015
(51) Int. Cl.: G06Q 10/08

(54) **PARCEL SORTER SYSTEM AND METHOD**

(30) Priority: 25.06.2014 GB 201411254
(62) Divisional of application: 15738849.7
(71) Applicant: Ocado Innovation Limited, Hatfield, Hertfordshire AL10 9UL (GB)
(72) Inventor: LINDBO, Lars Sverker Ture, Hatfield, Hertfordshire AL10 9UL (GB)
(74) Representative: Ocado Group IP Department

(57) **Abstract**

A system for managing shipment containers includes a storage and retrieval system and at least one processor. The storage-and-retrieval system includes a framework defining a plurality of adjacent stacks capable of receiving a plurality of stackable containers, each stackable container suitable for containing a shipment container; and a plurality of robotic pickers/load handlers configured to retrieve selected stackable containers from the framework for sortation and/or dispatch. The at least one processor is configured to: receive or access destination address information for each of the plurality of shipment containers entering the system; select a subset of the plurality of shipment containers for dispatch based on shipment container and generate signals for instructing at least one of the plurality of robotic pickers to retrieve the selected shipment containers for dispatch.

## Description

### FIELD OF THE INVENTION

The disclosure herein relates to systems and methods for order fulfillment. In particular, the disclosure provides systems and methods for managing shipment items in an order fulfillment process.

This application claims priority from UK application number GB1411254.4 the content of which is hereby incorporated by reference.

### BACKGROUND OF THE INVENTION

In the delivery industry, countless packages are collected from large numbers of locations spread across large geographical areas, and are processed before being shipped to their destinations.

Various forms of fully- and semi-automated sorting systems are known. They, and the various components they comprise, may take many forms. In some systems, packages travel along a conveyor which passes by a number of unloading stations each corresponding to a geographic destination. When a package on the conveyor passes the appropriate station, it is diverted by mechanisms such as stationary or pivoting barriers, tilt trays, or live roller beds. In some examples, these conveyor-type sorters can have a limited number of stations, and can require multiple passes to compete the sorting process.

There is need for improvement in the efficiency of systems and processes for sorting and/or managing shipment items.

### SUMMARY OF THE INVENTION

In various aspects, the disclosure herein provides methods, systems, and corresponding machine-executable coded instruction sets for sorting and/or managing shipment items.

In one aspect, there is provided a system for managing shipment containers. The system includes: a storage-and-retrieval system comprising: a framework defining a plurality of adjacent stacks, each stack capable of receiving a plurality of stackable containers, each stackable container suitable for containing a shipment container; tracks arranged above or below the framework to provide access to stackable containers received in the framework; and a plurality of robotic pickers/load handlers configured to move along a direction of the tracks and to retrieve selected stackable containers from the framework for sortation and/or dispatch. The system also includes at least one processor configured to: receive or access destination address information for each of the plurality of shipment containers entering the system; select a subset of the plurality of shipment containers for dispatch based on shipment container and generate signals for instructing at least one of the plurality of robotic pickers to retrieve the selected shipment containers for dispatch. The selection of the shipment containers is based on at least one of: a priority of the selected shipment containers; a capacity of a shipping vehicle on which the selected shipment containers are to be dispatched; and the destination addresses of the plurality of selected shipment containers.

### BRIEF DESCRIPTION OF THE DRAWINGS

The invention is illustrated in the figures of the accompanying drawings, which are meant to be exemplary and not limiting, and in which like references are intended to refer to like or corresponding parts.
Figures 1, 2, 5, 7, 9, and 11-13 are schematic block diagram illustrating example processes and systems to which aspects of the invention can be applied.
Figures 3-4 are example views of aspects of a sortation system suitable for use in implementing aspects of the invention.
Figure 6, 8, 10 are flowcharts showing example methods in accordance with aspects of the invention.

### DESCRIPTION OF EMBODIMENTS

Preferred embodiments of methods, systems, and apparatus suitable for use in implementing the invention are described through reference to the drawings.

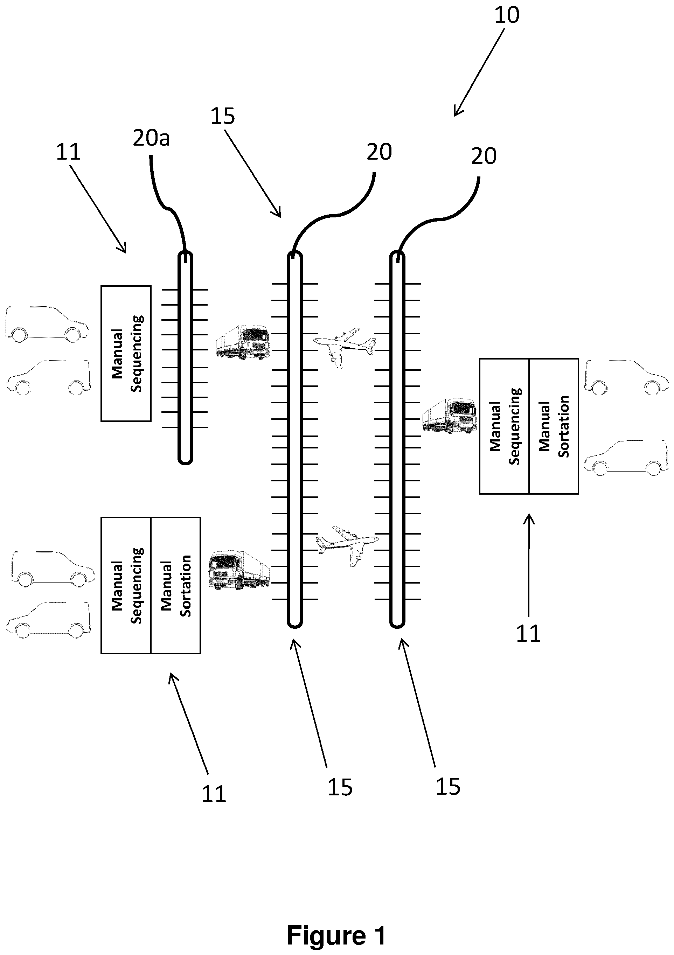

The sortation of shipment containers, such as boxes, envelopes, parcels, bags, crates, trays, wrapped goods, and the like, is often part of a larger shipping network. For example, Fig. 1 shows a shipping network 10 to which aspects of the present disclosure may be applied. In this example of a traditional tiered shipping network, a shipment container is picked up from its source by a person, van or other vehicle and is transported to a distribution system 11 where the shipment container is transferred to a truck or other vehicle to be transported to an origin regional sorting centre 15. At the regional sorting centre 15, the shipment container is sorted by an automated sorting system 20.

If the shipment container has a destination within the same region, the shipment container is transported back to a destination distribution system 11. If the shipment container has a destination in a different region, the shipment container is transported via plane, train, truck, or other vehicle to a destination regional sorting centre 15.

At the destination regional sorting centre 15, the shipment container is sorted again by an automated sorting system 20 so that it can be transported to the proper destination distribution system 11.

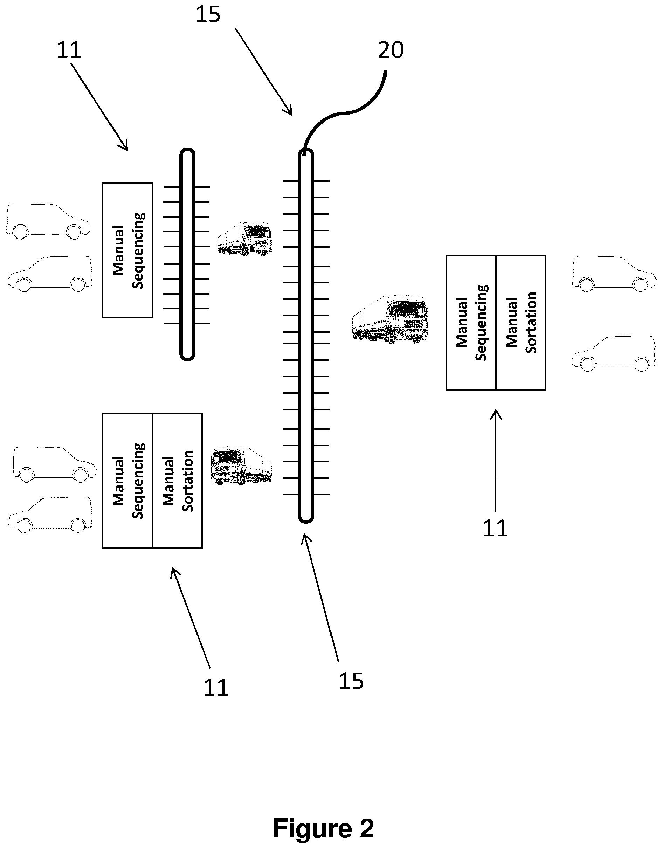

Fig. 2 shows another example shipping network where a single central regional sorting centre 15 for all distribution systems 11 in the network.

As illustrated for example in the shipping networks shown in Fig. 1 and Fig. 2, a single regional sorting centre 15 may service any number of distribution systems 11. In some examples, a regional sorting centre 15 may be associated with hundreds or even thousands of distribution systems 11. Similarly, while the example shipping network in Fig. 1 shows two regional sorting centres 15, any number of regional sorting centres is possible. These sorting centres may be associated with geographic areas and/or distribution systems 11 based on geographic location, population distributions, volume of shipment containers, or any other factors.

In other examples, a shipping network may have three or more levels of distribution. For example, the regional sorting centres 15 in Fig. 1 could feed into a larger sorting centre which may receive shipment containers from regional sorting centres 15 or distribution systems 11 for sorting before being transported to the appropriate regional sorting centre 15.

In any of the above examples or otherwise, when a shipping container arrives at the destination distribution system 11 (e.g. from an origin regional sorting centre or another destination regional sorting centre), the shipment container is sorted into vans or other vehicles for dispatch to the final destination. In some examples, this may involve manual sortation, or an automated sorting system 20a. Whether automated or manual, the sorted shipment containers for one or more shipping vehicles may be manually sequenced. In one example, shipment containers are manually placed non-sequentially in an arrangement of pigeon holes based on sequencing criteria and then are removed in a defined sequence.

As illustrated by the above example, traditional sortation of shipment containers may involve multiple steps, some of which may be manually intensive, and may involve multi-tiered systems and transportation between them. Such systems using conventional conveyor-type sorters may require multiple sorting passes at a single location, sorting passes at multiple locations, and/or manual sequencing at one or more locations.

Shipping networks having parcel storage/handling hubs are generally very dynamic in that parcels are constantly arriving and leaving based on, for example, delivery chains and the just-in-time nature of operation of shipping businesses. In each hub, significant volumes of shipment containers may arrive via any number of media (e.g. air, land, rail, water, etc.), and may be tracked, stored and redirected for further transport. In some industries or applications, this process may require quick turnarounds and throughputs of storage, retrieval and dispatch of the shipment containers. When loading vehicles, there may be limited processing points for dispatch of shipment containers from a warehouse to a point of transportation (e.g. shipping docks for transfer to trucks or vans) or handling points for delivery to airplanes, trains, ships or other large vehicles. Due to the volume and limited number of processing points, there may be relatively small windows of time to locate, retrieve and deliver selected shipment containers to the required vehicles or locations.

In some instances, storage/handling hubs may be located on expensive real estate (e.g. near docks, airports, etc.), and therefore, there may be an interest in utilizing finite space as efficiently as possible.

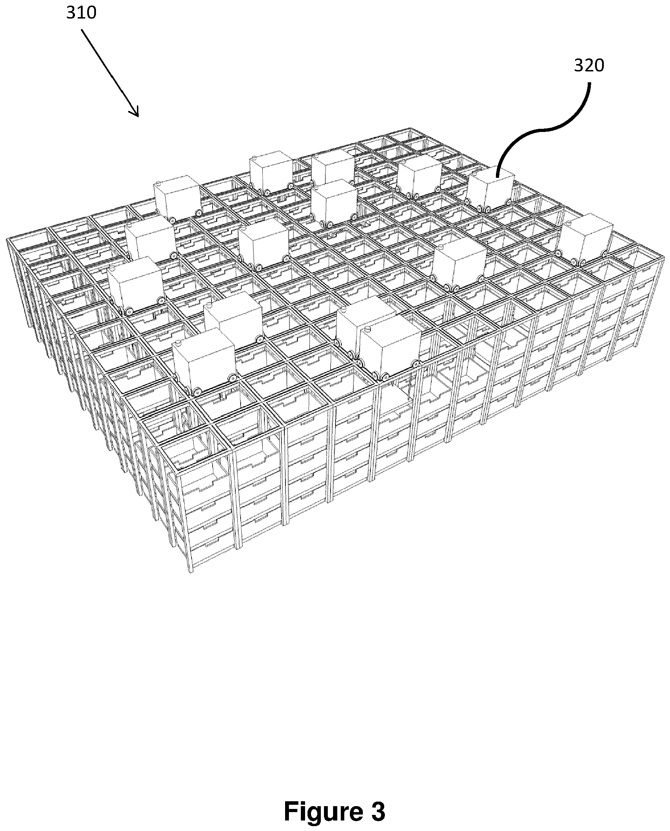

With reference to Fig. 3, an example system for managing shipment containers may include a fully- and/or semi-automatic storage and retrieval system 310. One manner of providing access to shipment containers stored for fully- and/or semi-automatic retrieval, for example, comprises placement of shipment containers, which may be of any desired type(s), in bins or other containers (hereinafter referred to generically as containers), and stacking and/or otherwise disposing the containers vertically in layers, and optionally in multiple columns and/or rows, such that individual containers may be accessible by wholly or partially-automated container retrieval systems. Such systems can for example comprise various combinations of containers; container stack support mechanisms, which may include mechanical devices such as frames and/or free-standing, stackable, and/or otherwise specialized container(s); and automated or semi-automated (i.e., "robotic") retrieval devices, such as load handlers which may for example operate on grids or other forms of rails, using wheels, and/or on other forms of mechanical traveling devices. In some examples, rather than being placed within containers manipulated by the storage-and-retrieval system, the shipment containers may configured such that they can be stored in the storage-and-retrieval system without being placed within the containers or bins.

For example, as shown in Figure 3, storage and retrieval systems may be provided in forms comprising a framework of rows and columns of stacked containers, in combination with overhead rail-operated load handlers 320 or other robots configured to access the containers for both storage and removal, from above. In another example, the storage and retrieval system may include load handlers as part of a gantry system for storing and retrieving the containers.

In some examples, the containers for storing and retrieving may have a uniform or substantially uniform size. In some embodiments, the system may be configured to handle containers of different sizes. For example, different containers may have different heights but similarly-sized footprints (i.e. lengths and widths).

In another example, the system may configured to handle containers having different sized footprints and/or heights, but may be confined to storing different containers in specific stack locations associated with those dimensions. These example systems may utilize different load handlers for storing and retrieving the differently-sized containers.

In some embodiments, the storage and retrieval system 310 may include a plurality of ports or other access points through which containers can be inducted or dispatched from the storage and retrieval system. These ports may include any one or combination of ramps, conveyors, pulleys, lifting devices, or any other mechanism(s) suitable for moving container(s) to/from the storage-and-retrieval system, or for holding the container(s) temporarily until they can be moved to/from the storage-and-retrieval system. In some examples, from the ports, the system may move the containers for positioning in/on a vehicle, pallet and/or roll cage. In some examples, the ports may be configured such that the load handlers transport the container(s) retrieved from the storage and retrieval system 310 directed into/onto a vehicle, pallet and/or roll cage.

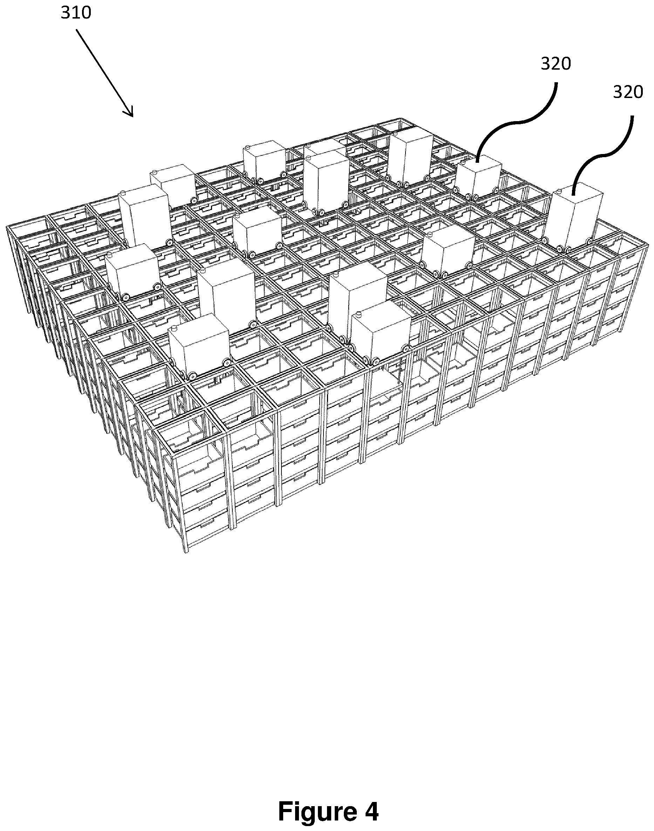

The storage and retrieval system 310 can be configured such that the load handlers can move, manipulate and/or transport container(s) to and from the ports and/or between different locations within the storage and retrieval system. In some examples, the load handlers may be configured to handle different sized containers. For example, in systems having containers of different heights, the systems may include different load handlers for each differently sized container (e.g. a taller container may require a taller load handler) (See, for example, Fig. 4). In other examples, the load handlers may be configured to handle any sized container in the system.

The load handlers may be configured to receive instructions from or to be controlled by one or more processor(s). The processor(s) and load handlers may be configured to communicate over a communication network capable of handling a communications with a large number (e.g. thousands) of load handlers. In some examples, the communication network may be a wireless network such as Wi-Fi, OFDMA (Orthogonal Frequency-Division Multiple Access), or any other network configuration or protocol.

The storage and retrieval system 310 may include a large number of ports or other access points. For example, the system may include a port for every row and/or column, or a port for every other row and/or column. In another example, the system may include a port every X feet (e.g. every 4 feet). The number of ports maybe relative to the size of the storage and retrieval system 310 and/or the number of load handlers 320. For example, in a 1000x600 ft or 600,000 ft² sorter, the system may generally have 200-300 ports but could reach up to 500 ports.

In some examples, having a large number of ports may improve the throughput and/or efficiency when inducting or dispatching shipment container(s) to or from the storage and retrieval system 310.

In example embodiments, the shipment containers can be placed within containers for storage in the storage and retrieval system 310. These shipment containers may be in any form, shape, weight and/or size suitable for placement within the storage and retrieval system containers. For example, shipment containers can include, but are not limited to, boxes, envelopes, parcels, bags, crates, trays, wrapped goods, or any other container suitable for being shipped.

As described herein, the storage and retrieval system 310 may, in some examples, be configured to provide containers for dispatch in a sorted and/or sequenced manner.

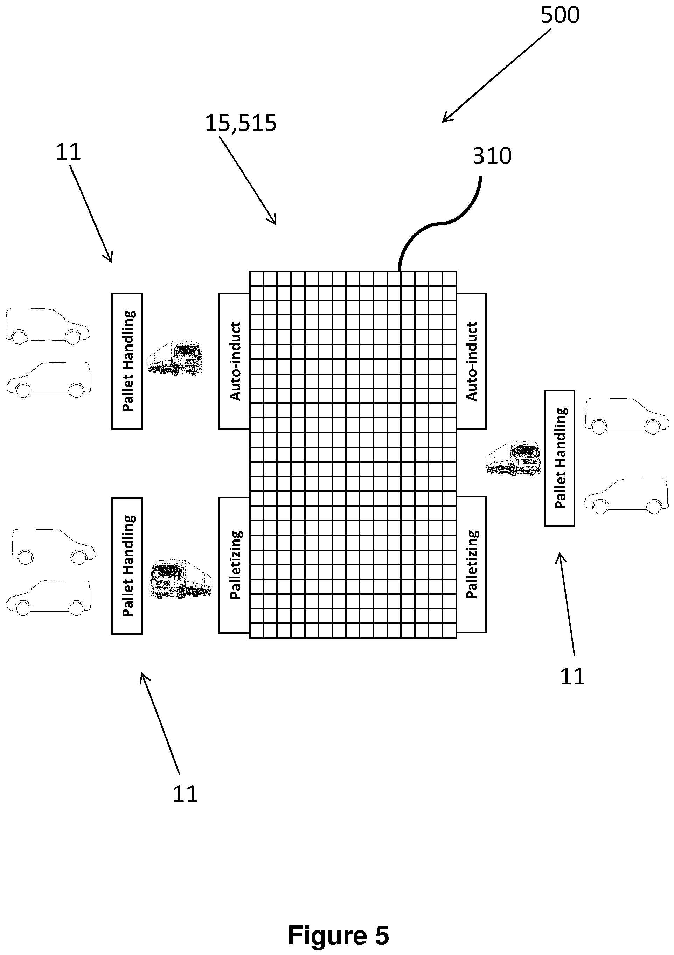

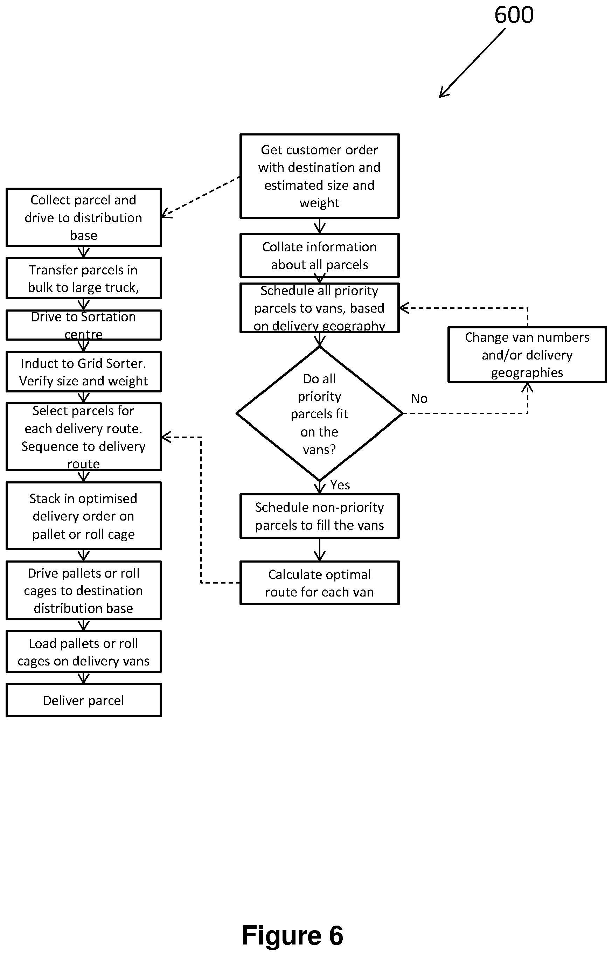

Fig. 5 shows an example shipping network 500 which includes or to which aspects of the present disclosure may be applied. Fig. 6 shows an example method 600 for managing shipment containers and will be described by way of example with reference to Fig. 5. The shipping networks described herein may include one or more servers, control systems, and communication networks including one or more processors configured to track and manage shipment container information, and to schedule, sort and/or sequence shipment containers for dispatch in accordance with any of the example methods described herein.

In an example scenario, an incoming shipment container arrives at the example shipping network 500 at a distribution system 11 via a van or other vehicle. This van or other vehicle may have picked up one or more shipment containers from a customer location, a postal outlet, a mailbox, or any other depot or similar location. At the distribution system 11, the shipment container may be transferred to a truck or other vehicle to a sortation system 15, 515 including a storage and retrieval system 310. Depending on distance or other considerations, in some examples, shipment containers may arrive directly at the sortation system 15, 515 without first arriving at the distribution system 11.

Upon its arrival at the sortation system 15, 515, the shipment container may optionally be weighed and/or measured to verify size and or weight information associated with the shipment container in a system database or other electronic storage. Information associated with the shipment container such as the size and weight information as well as destination information may be entered into the system at any point before the shipment container is retrieved for dispatch. For example, information associated with the shipment container may be received from a customer order, from an entry at a post office or other depot, or via a data input at the distribution base or sortation system 15, 515.

The shipment container can, in some examples, be placed in a storage and retrieval container for subsequent storage and/or management within the storage and retrieval system. Generally, for greater ease in tracking, each shipment container may be stored within a separate storage and retrieval container. However, in some example embodiments, two or more shipment containers may be stored within the same storage and retrieval container. This may be applied in scenarios for example when multiple shipment containers, which fit in a single storage and retrieval container, are destined for the same final or intermediate destination.

The shipment container, within a storage and retrieval system container or otherwise, can be inducted or otherwise stored in the storage and retrieval system 310 via one or more ports. Induction or storage may, in some examples, involve scanning a barcode, RFID or other identifier on the shipment container and/or placing the shipment container within a storage-and-retrieval system container. Induction or storage may also involve associating the shipment container identifier with an identifier and/or location associated with the storage-and-retrieval system container in which the shipment container is placed.

The sortation system 15, 515 can be configured to receive instructions to prepare one or more selected shipment containers for dispatch. Upon receiving these instructions, one or more load handlers can be configured to receive instructions to retrieve containers containing the selected shipment containers. The selected shipment containers can be dispatched from the storage-and-retrieval system 310 via the load handler(s) and/or port(s) in an order such that the shipment containers are grouped into groupings associated with the last leg vehicle which will be used to dispatch the selected containers to their final destinations. In some examples, the shipment containers can be sequenced based on an order for loading the last leg vehicle, and/or a delivery order/route to be potentially followed by the last leg vehicle.

In some examples, each grouping associated with a different last leg vehicle may be stored separately. For example, a grouping for a last leg delivery van may be stored in a roll cage, on a pallet, or in a large bag or other larger container. In other examples, the grouping(s) may be maintained simply by storing and/or loading the shipment packages into a vehicle in a known sequence and/or with physical (e.g. tags, stickers), or logical (e.g. shipment container identifiers) mechanisms for separating the groupings. In some examples, the groupings may be kept together by storing each grouping in a separate section/division of a vehicle.

Upon their selection and retrieval from the storage and retrieval system, the grouped shipment containers having destinations associated with the same distribution system 11 can be transported to the distribution system 11 via a truck or other vehicle.

Since the shipment containers are already grouped and sequenced, at the distribution system, the shipment container groupings can be loaded onto last leg vehicles with little or no sorting/processing/handling at the distribution system 11. In some examples, the distribution system 11 may perform little or no sortation or sequencing. These processes and systems may, in some scenarios, provide simpler, faster, lower-cost, and/or more efficient shipment container management at the distribution system 11 and/or in the shipping network as a whole.

When the shipment containers are grouped onto pallets, roll cages or other containers, the entire pallet(s), roll cage(s) or other container(s) can be transferred from the vehicle arriving from the sortation system 15, 515 to the last leg vehicle for dispatch. This can take place at a pallet handling station or other location which may, in some examples, include temporary storage for the groupings until a last leg or other vehicle is available.

In some example embodiments, the placement of storage and retrieval containers within the storage and retrieval system during induction or during any rearrangement or shuffling of containers can be controlled by one or more processors at the sortation system 15, 515 or elsewhere in the shipping network. These or other processor(s) can be configured to generate signals for controlling or instructing the load handlers.

In some scenarios, the processor(s) may be configured to generate signals for stacking a container in a stack in the storage and retrieval system, the stack corresponding to a vehicle load. In some examples, one or more stacks may be associated with a single vehicle load. In some examples, containers may be stored in a stack in a reverse order to the order in which they need to be grouped on a pallet, roll cage or vehicle. Once all the shipment containers for a given vehicle are in the sortation system, the load handlers can be instructed/controlled to transport the containers to a load station where the shipment containers can be removed from the storage and retrieval containers and placed onto pallets, roll cages, or into a vehicle. The removal and placement of the shipment containers may be done manually or with (semi-)automated robot(s) or other equipment. In examples where every stack corresponds to a different destination or vehicle, and each grid location requires approximately 5 ft², a 1000x600 ft grid could have 120,000 destinations. Such an example system can be used to sort/sequence for a very large delivery fleet.

As illustrated in the above example, sorting/sequencing of the containers can be generally performed during the induction of a new shipment container into the system, and potential rearrangement of proximate containers. However, in another example, the sorting/sequencing of the containers may be performed during the retrieval of the containers.

For example, during induction, the containers may be stored at pseudo-random storage locations within the system, with the processor(s) monitoring or otherwise keeping track of the container at each storage location. Once the containers for filing or near-filling a vehicle load (or upon another trigger), the processor(s) can be configured to instruction/control the load handler(s) to assemble the containers for the vehicle load. Even though the selected containers may be dispersed at different locations in the system, these instructions can be generated in an order or manner such that the containers arrive at the load station in the desired grouping and/or sequence.

In other examples, the sorting/sequencing or otherwise arrangement of the containers in the system may be during induction, during retrieval, or during an interim period. For example, the processor(s) may be configured to instruct the load handlers to sort/sequence containers in a stack associated with a vehicle during induction when load handlers are available, and to store containers pseudorandomly when load handlers are not readily available. This may depend, for example on load handler congestion or backlogs in induction, retrieval, etc. During interim periods, the processor(s) may be configured to instruct available load handlers to move or otherwise rearrange any (pseudonrandomly-stored or otherwise) container not in a stack associated with a desired vehicle to a stack (and, when possible/desired, in a sequence) associated with the desired vehicle.

A conventional conveyor/redirection sorter as described in the background may be able to sort 20,000 to 50,000 parcels per hour. In contrast, a grid sorter as described herein having 10,000 load handlers, which could each perform approximately 50 moves per hour, could potentially sort 250,000 to 500,000 parcels per hour.

In some examples, the example embodiments described in Figs. 5 and 6 may be well-suited for relatively dense shipment networks such as a shipping network for the Netherlands.

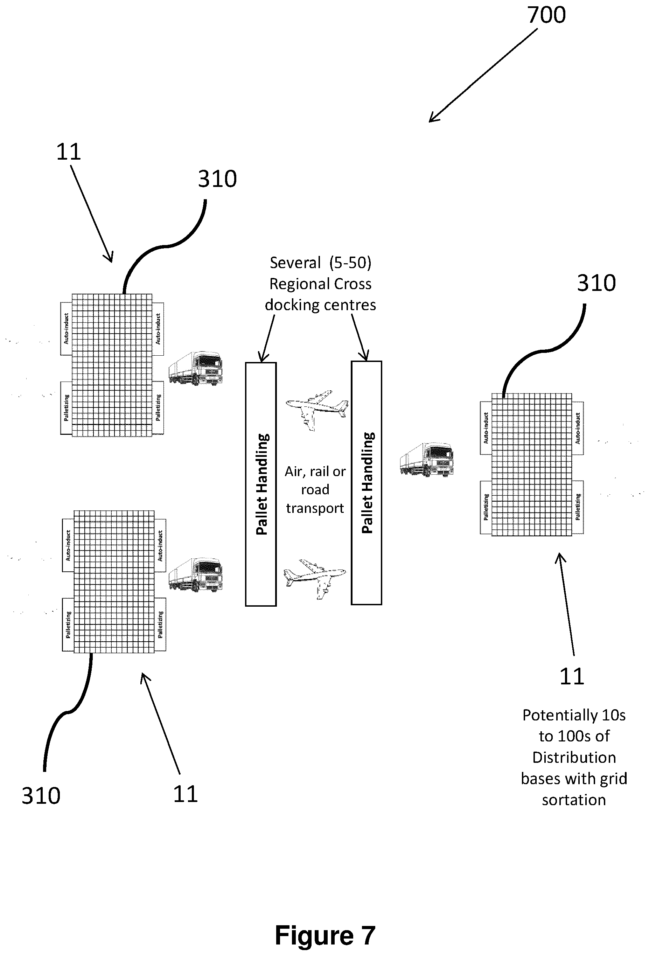

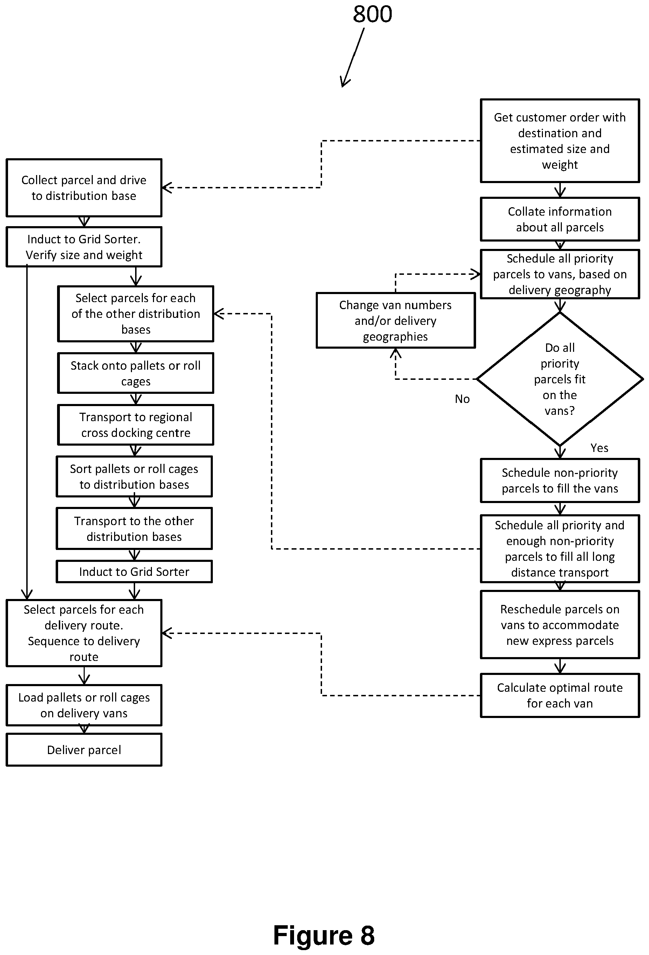

Fig. 7 shows an example shipping network 700 which includes or to which aspects of the present disclosure may be applied. Fig. 8 shows an example method 800 for managing shipment containers and will be described by way of example with reference to Fig. 7.

In the example shipping network 700, sortation system(s) 515, as described for example with reference to Figs 5 and 6 or otherwise, can be located at one or more distribution system(s) 11. Upon arrival at the distribution system(s), incoming shipment containers can be inducted at this initial distribution system 11. The shipment containers destined for a different distribution system can be retrieved and sorted/grouped in a similar manner to the other examples described herein. However, at this stage, sequencing of the shipment containers may not be performed. The retrieved and grouped shipment containers (in pallets, roll cages or otherwise) can be transferred by truck or other vehicle to a regional centre 15.

Since the shipment containers are already grouped when they arrive at the regional centre, the shipment container groupings can be loaded onto vehicles on which they can be transported to a destination distribution system 11, or to a second destination regional centre 15 and subsequently to a destination distribution system 11 associated with the second destination regional centre. At the regional level, no individual shipment container sorting may be necessary, but rather the groupings/pallets/roll cages may be handled and transferred to a vehicle destined for the proper destination distribution system.

When the shipment containers arrive at their destination distribution system 11, 515, if not already sequenced, the shipment containers may be inducted into the destination distribution system 11, 515 for storage, sorting and/or sequencing (potentially with other shipment containers from a different initial distribution system) before being dispatched to a last leg vehicle.

In some examples, the example embodiments described in Figs. 7 and 8 may be well-suited for geographically larger shipping networks such as one for the United States or North America.

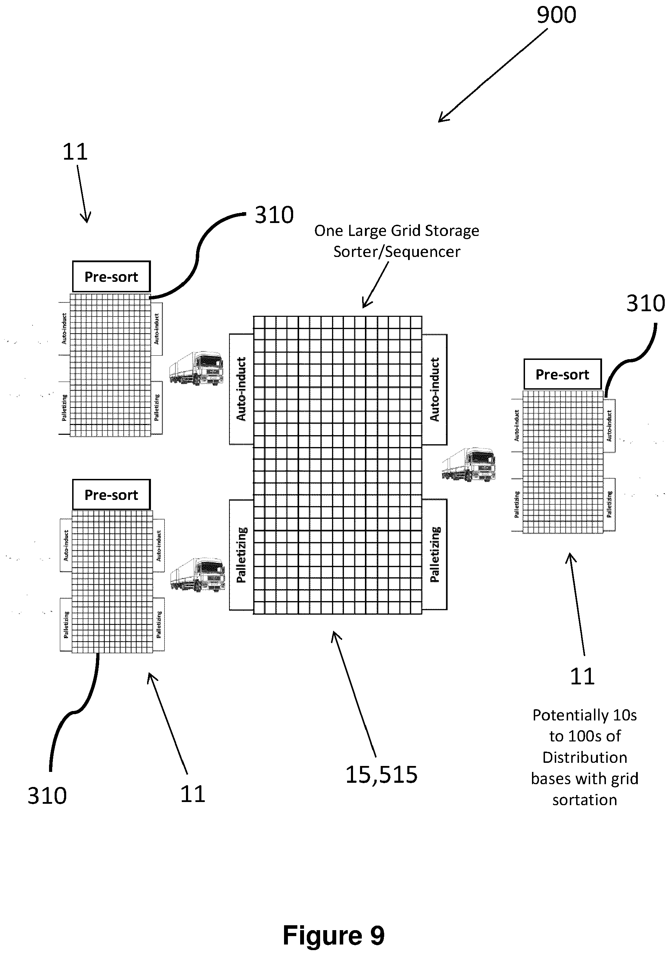

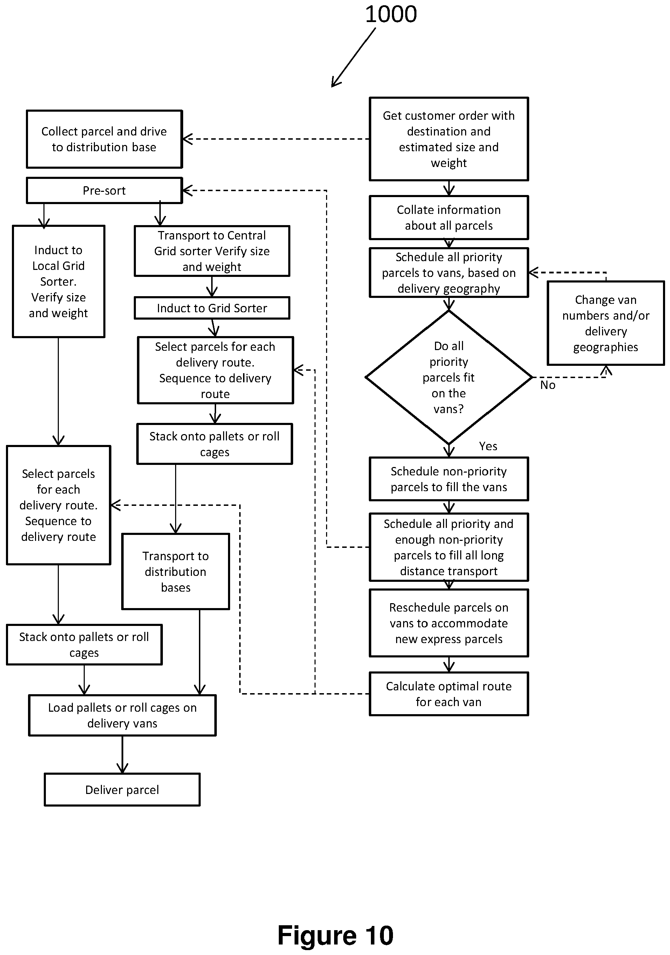

Fig. 9 shows an example shipping network 900 which includes or to which aspects of the present disclosure may be applied. Fig. 10 shows an example method 1000 for managing shipment containers and will be described by way of example with reference to Fig. 9.

In the example shipping network 900, sortation system(s) 515, as described for example with reference to Figs 5 and 6 or otherwise, can be located at one or more distribution system(s) 11, and one or more regional centre(s) 15.

Incoming shipment containers can be inducted into a sortation system 515 at a local/distribution system 11 or can bypass this system and be inducted into a sortation system 515 at the regional centre 15. This decision may be performed as a pre-sort at the local/distribution centre, or may be performed as the incoming van or other vehicle is picking up the shipment containers at their source.

Both the local/distribution 11 sortation system and the regional centre 15 sortation system can be configured to group and sequence shipment containers into vehicle groupings as described in other examples herein.

One or more processor(s) in the network 900 may be configured to determine where a shipment container should be stored and/or sorted in a manner that seeks to optimize the utilization of vehicles and sorters across the network.

In some examples, the example embodiments described in Figs. 9 and 10 may be well-suited for relatively dense shipping networks as may exist in Germany, France or the U.K.

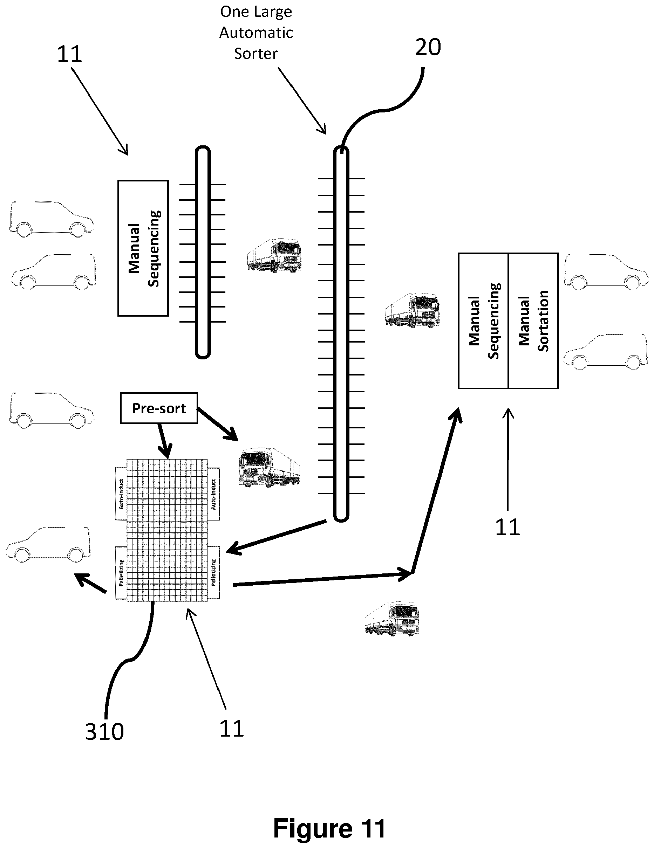

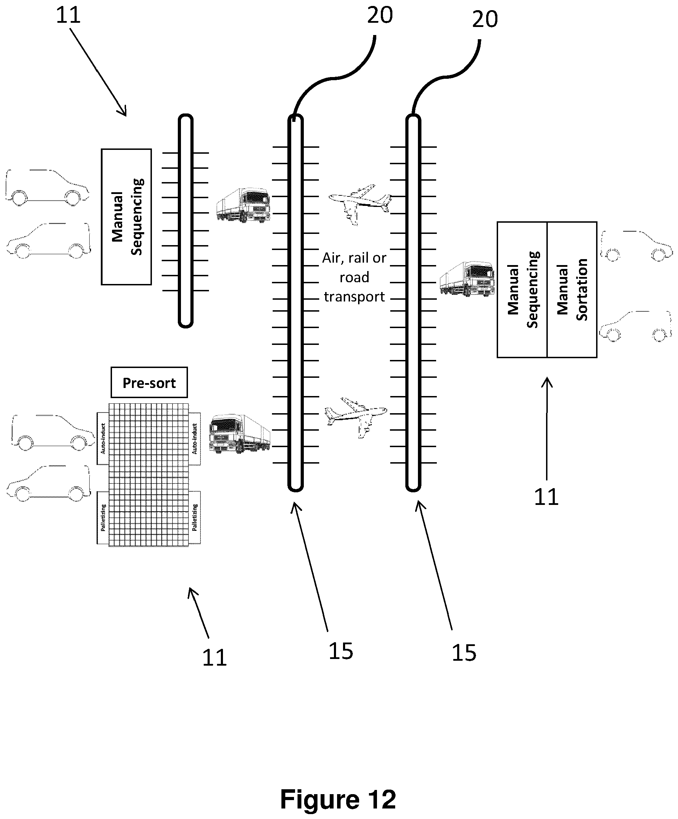

Figs. 11 and 12 show example shipping networks wherein conventional conveyor-redirection based sorters are used in conjunction with any of the example grid sorters described herein. These shipping networks may be utilized during a transition from a network with only conventional conveyor-redirection based sorters to the grid-based sorter networks described herein.

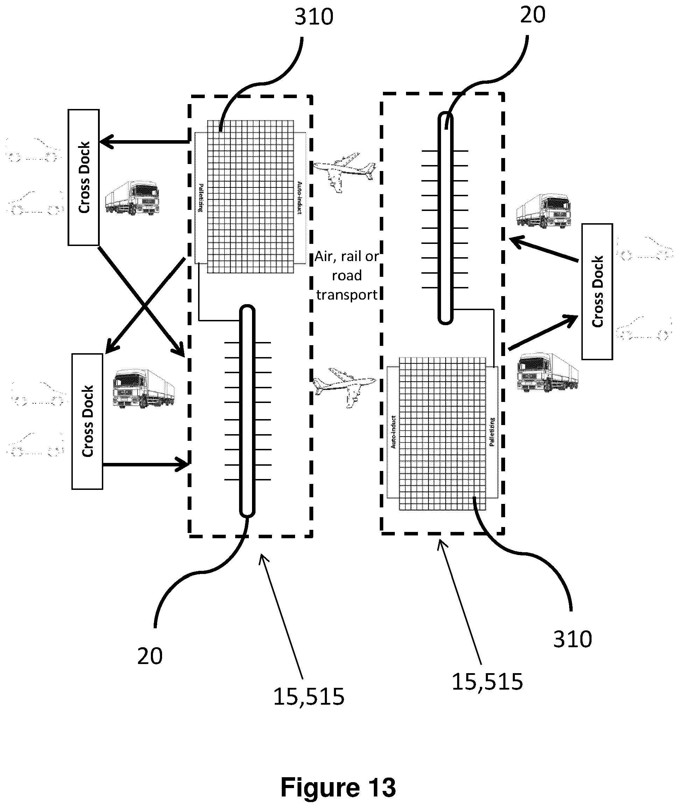

Fig. 13 shows an example shipping network wherein conveyor-redirection based sorters can be retained at one or more sortation centres along with a grid-based sorter system such as any of those described herein or otherwise. In some such example embodiments, the conveyor-redirection based sorter(s) can be used to sort in-coming shipment containers to the various sortation centres, while the grid-based sorter(s) can be used to sort and sequence out-going shipment containers for distribution vehicles in its own region. In some examples, at the local distribution centres, the handling of shipment containers may be reduced to moving ready-packed pallets or roll cages from the vehicles coming from the regional sortation centres to distribution or last leg vehicles (cross-docking).

While in the examples above, incoming shipment containers are described as arriving from vehicles, in some examples, incoming shipment containers may arrive via conveyor or other transport mechanisms from a picking station or other system as part of an order fulfillment process. Once a shipment container for an order has been picked, the shipment container may be directed to a sortation system 515 at a distribution or regional centre in accordance with any of the examples described herein or otherwise. In some examples, the grid-based sortation system may store/manage both inventory for picking as well as shipment containers for storing/sorting/sequencing.

As described broadly in the above examples, and illustrated by way of example in Figs. 6, 8 and 10, one or more processor(s) may be configured to collect and manage information associated with a shipment package such as size, weight, destination address, priority, current location, storage location within a sortation system 515, etc. These processor(s) may be distributed and/or located at any location or system in the shipping network.

With at least some of this information, the processor(s) may be configured to track the movement, locations and destinations of shipment containers. The processor(s) can be configured to store, sort, group and/or sequence the shipment containers based on any number of factors including but not limited to the destination of the shipping containers, the priority of the shipment containers, and the capacity of a shipping vehicle on which selected shipment containers are to be dispatched.

In some examples, higher priority shipment containers may be scheduled for storage to and/or retrieval from the storage and retrieval system 310 before lower priority shipment containers. When a vehicle is available, in some examples, one or more priority shipment containers can be selected for grouping, sequencing and/or loading into the vehicle before lower priority containers. Unlike conventional systems, the ability of a grid-based sortation system 515 to hold back or reschedule lower priority parcels may reduce vehicle movement and/or may reduce delivery times for priority containers. In some examples, lower priority shipment containers maybe moved opportunistically, for example to fill a vehicle partially-filled with higher priority containers. This can, in some instances, be particularly beneficial for long hauls or via expensive transport.

In some examples, the processor(s) may be configured to select, group and/or sequence shipment containers such that as much of the capacity of a vehicle is filled as would be efficient. In some examples, the processor(s) may be configured to sequence shipment containers in an order which makes it easier to load a vehicle (e.g. an order which allows larger shipment containers to be loaded first). In other examples, the processor(s) may be configured to sequence shipment containers in an order similar to the order in which the containers are to be delivered by the last leg vehicle.

In some examples, the processor(s) may be configured to select, group and/or sequence shipment containers such that the total delivery time for the last leg vehicle based on the destinations of the selected containers and the travel times between them maximizes or utilizes the most time of a driver's shift.

As will be further understood by those skilled in the relevant arts, significant advantage may be realized through the full or partial automation of any of the processes described above, or portions thereof. Such automation may be implemented by, for example, providing automated induction into the grid sorter by means of industrial robots, conveyors and scanners as well as automated exit from the grid sorter by means of industrial robots, or other placement equipment.

Such automation may be provided in any suitable manner, including for example the use of automatic data processors executing suitably-configured, coded, machine-readable instructions using a wide variety of devices, some of which are known and others of which will doubtless be developed hereafter. Processor(s) suitable for use in such implementations can comprise any one or more data processor(s), computer(s), and/or other system(s) or device(s), and necessary or desirable input/output, communications, control, operating system, and other devices, including software, that are suitable for accomplishing the purposes described herein. For example, a general-purpose data processor provided on one or more circuit boards will suffice.

In the embodiments described above, it will be appreciated that the tracks and the robotic pickers/load handlers may be of any suitable size and form capable of performing the invention as described. However, it will be appreciated that the tracks may comprise two substantially perpendicular sets of rails, together forming tracks disposed above the stacks of stackable containers. Furthermore, the robotic pickers/load handlers may comprise a body mounted on wheels, the first set of wheels being arranged to engage with at least two rails of the first set of rails, the second set of wheels being arranged to engage with at least two rails of the second set of rails, the first set of wheels being independently moveable and driveable with respect to the second set of wheels such that when in motion only one set of wheels is engaged with the grid at any one time thereby enabling movement of the load handling device along the rails to any point on the grid by driving only the set of wheels engaged with the rails. Such a track system and robotic picker/load handling device is described in UK Patent Publication No GB2520104A1, the content of which is hereby incorporated by reference.

In the above description it will be appreciated that a sortation system is a system in which everything entering the system has a predetermined destination, whereas in a storage and retrieval system items entering the system may be allocated a destination whilst being stored in the system. Whilst the above description generally relates to a storage system, it will be appreciated that it may also be relevant to a storage and retrieval system.

While the disclosure has been provided and illustrated in connection with specific, presently-preferred embodiments, many variations and modifications may be made without departing from the spirit and scope of the invention(s) disclosed herein. The disclosure and invention(s) are therefore not to be limited to the exact components or details of methodology or construction set forth above. Except to the extent necessary or inherent in the processes themselves, no particular order to steps or stages of methods or processes described in this disclosure, including the Figures, is intended or implied. In many cases the order of process steps may be varied without changing the purpose, effect, or import of the methods described. The scope of the invention is to be defined solely by the appended claims, giving due consideration to the doctrine of equivalents and related doctrines.

## Claims

1. A system for managing shipment containers, the system comprising:
a storage-and-retrieval system comprising:
a framework defining a plurality of adjacent stacks, each stack capable of receiving a plurality of stackable containers, each stackable container suitable for containing a shipment container;
tracks arranged above or below the framework to provide access to stackable containers received in the framework; and
a plurality of robotic pickers/load handlers configured to move along a direction of the tracks and to retrieve selected stackable containers from the framework for sortation and/or dispatch; and
at least one processor configured to:
receive or access destination address information for each of the plurality of shipment containers entering the system;
select a subset of the plurality of shipment containers for dispatch based on shipment container and
generate signals for instructing at least one of the plurality of robotic pickers to retrieve the selected shipment containers for dispatch, the selection of the shipment containers based on at least one of:
a priority of the selected shipment containers;
a capacity of a shipping vehicle on which the selected shipment containers are to be dispatched; and
the destination addresses of the plurality of selected shipment containers.

2. The system of claim 1, wherein the plurality of robotic pickers are configured to transport the retrieved stackable containers for dispatch via at least one of a plurality of transfer points at the storage-and-retrieval system.

3. The system of claim 1 or 2, wherein the plurality of robotic pickers or a second plurality of robotic pickers are configured for inducting shipment containers into the storage-and-retrieval system via at least one of a plurality of transfer points at the storage-and-retrieval system.

4. The system of any preceding claim, wherein the selection of the shipment containers is based on at least one of: a weight and at least one dimension of at least one of the shipment containers.

5. The system of any preceding claim, wherein the at least one processor is configured to select shipment containers for dispatch in the shipping vehicle to substantially fill a delivery period associated with the shipping vehicle based on the destination addresses of the shipping containers.

6. The system of any preceding claim, wherein the at least one processor is configured to select shipment containers for dispatch by not selecting a lower priority shipment container when a higher priority shipment container is available.

7. The system of any preceding claim, wherein the at least one processor is configured to select at least one lower priority shipment container along with higher priority shipment containers when the capacity of the shipping vehicle can accommodate the at least one lower priority shipment container.

8. The system of any preceding claim, wherein the at least one processor is configured to generate signals for instructing at least two of the plurality of robotic pickers to concurrently retrieve selected shipment containers for dispatch via the same shipping vehicle.

9. The system of any preceding claim, wherein the at least one processor is configured to generate signals for instructing at least two of the plurality of robotic pickers to concurrently retrieve selected shipment containers for dispatch via different shipping vehicles.

10. The system of any preceding claim, wherein the at least one processor is configured to select shipment containers for dispatch in a specific sequence.

11. The system of claim 10, wherein the sequence is selected to decrease unfilled capacity of the shipping vehicle, or to ease loading or unloading of the selected shipment containers into or out of the shipping vehicle.

12. The system of claim 10 or 11, wherein the sequence is selected based at least in part on a sequence in which the shipment containers will be delivered.

13. The system of any preceding claim, wherein no more than one shipment container is stored in a single stackable container.

14. The system of any preceding claim, wherein the at least one processor is configured to select shipment containers for dispatch to a second system for managing shipment containers.

15. The system of claim 14, wherein the at least one processor is configured to select the shipment containers for dispatch to the second system in a sequence or a grouping such that the shipment containers can be dispatched from the second system for delivery with reduced or no additional sorting at the second system.

16. The system of claim 14 or 15, wherein the system is a regional system configured for delivering shipment containers having destination addresses within an associated geographic region and for shipping shipment containers having destination addresses outside the associated geographic region to the second system.

17. The system of claim 16 wherein the second system is another regional system.

18. The system of claim 16 wherein the second system is a central system configured for shipping shipment containers to the regional system and at least one other regional system.

19. The system of claim 14 or 15, wherein the system is a central system and the second system is a regional system.

20. The system of any preceding claim, wherein the tracks comprise two substantially perpendicular sets of rails forming a grid above the stacks of stackable containers.

21. The system of claim 20, wherein the robotic pickers/load handlers comprise a body mounted on wheels, a first set of wheels being arranged to engage with at least two rails of the first set of rails, the second set of wheels being arranged to engage with at least two rails of the second set of rails, the first set of wheels being independently moveable and driveable with respect to the second set of wheels such that when in motion only one set of wheels is engaged with the grid at any one time thereby enabling movement of the robotic pickers/load handling devices along the rails to any point on the grid by driving only the set of wheels engaged with the rails.

22. A method of sorting items comprising use of a system as claimed in any preceding claim.
